Europäisches Patentamt

European Patent Office

Office européen des brevets

(11) Publication number: **0 338 718**
**A2**

# EUROPEAN PATENT APPLICATION

(21) Application number: **89303592.3**

(51) Int. Cl.4: **C04B 35/58**

(22) Date of filing: **12.04.89**

| | |
|---|---|
| The title of the invention has been amended (Guidelines for Examination in the EPO, A-III, 7.3). | (71) Applicant: **VESUVIUS ZYALONS MIDLANDS LTD**<br>**Tonyrefail**<br>**Porth Mid Glamorgan CF39 8YW Wales(GB)** |
| (30) Priority: **16.04.88 GB 8809052** | (72) Inventor: **Jasper, Carl Adrian**<br>**20 Burnthurst Crescent Monk Path**<br>**Solihull West Midlands(GB)** |
| (43) Date of publication of application:<br>**25.10.89 Bulletin 89/43** | |
| (84) Designated Contracting States:<br>**BE CH DE ES FR GB IT LI SE** | (74) Representative: **Curtis, Philip Anthony et al**<br>**Eric Potter & Clarkson 14 Oxford Street**<br>**Nottingham NG1 5BP(GB)** |

(54) **Ceramic material of silicon aluminium oxynitride and method of manufacture.**

(57) A ceramic material of silicon aluminium oxynitride comprises a first phase (16) of $\alpha$-phase sialon, a second phase (18) of $\beta$-phase sialon and a third phase (20) which is predominantly glassy or predominantly crystalline. A method for producing the ceramic material is also disclosed.

EP 0 338 718 A2

## CERAMIC MATERIAL AND METHOD OF MANUFACTURE

This invention relates to a ceramic material and a method of manufacturing a ceramic material.

More particularly the invention relates to a ceramic material which includes silicon aluminium oxynitride. This is commonly known as sialon and may be formed as $\alpha$-phase sialon or as $\beta$-phase sialon.

$\alpha$-phase sialon has the formula $Mx (Si,Al)_{12} (O,N)_{16}$ where x may be up to about 2, and M is a modifying cation such as yttrium. $\beta$-phase sialon has the formula $Si_{6-z}Al_z N_{8-z}O_z$, where z is, for example, up to about 4.

In GB-A-2118927 there is disclosed a ceramic material which comprises a mixture of $\alpha$-phase sialon, $\beta$-phase sialon and a glassy phase.

In all the examples of this specification the glassy phase comprises about 10 wt.% of the total.

The glassy phase is present as a substantially continuous intergranular phase. This means that in any given piece of the ceramic material it is possible to trace a continuous path along the glassy phase from one side of the material to the other. In practice, the ceramic material comprises $\alpha$-phase and $\beta$-phase sialon in the form of granules which are substantially surrounded by the glassy phase.

The ceramic material disclosed in GB-A-2118927 has hardness properties which are far superior to the hardness properties of earlier sialon containing ceramic materials. However, the ceramic material has poor creep properties, due to the intergranular glassy phase.

According to one aspect of the present invention there is provided a ceramic material of silicon aluminium oxynitride, comprising a first phase of $\alpha$-phase sialon, a second phase of $\beta$-phase sialon, and a third phase, characterised in that substantially all the third phase present in the ceramic material is in the form of a discontinuous phase.

Thus, the third phase does not extend continuously through the ceramic material, so the ceramic material does not possess the continuous intergranular glassy phase described in GB-A-2118927.

The creep properties of the ceramic material according to the invention, especially at high temperatures, are far superior to prior ceramic materials. Moreover, this is achieved without any reduction in the improved hardness properties obtained in the ceramic material disclosed in GB-A-2118927.

The ceramic material according to the invention is particularly useful in high temperature applications. The ceramic material can be used, for example, in dies for metal drawing, in engine parts, and in machine tools.

Preferably the third phase comprises less than substantially 5% by weight of the total weight of the ceramic material. More preferably the third phase comprises less than substantially 3 wt.% of the total weight, and most preferably the third phase comprises less than substantially 1 wt.% of the total weight.

In one embodiment of the invention the third phase is predominantly a glassy phase. The third phase may include lesser quantities of other constituents, for example: YAG (yttrium aluminium garnet), which is a cubic phase having the formula $Y_3Al_5O_{12}$; Y-N-$\alpha$-Wollastonite, which is a monoclinic phase of formula $YSiO_2N$; YAM, which is a monoclinic phase of formula $Y_4Al_2O_9$; N-YAM, which is a monoclinic phase of formula $Y_4Si_2O_7N_2$ which is isostructural with YAM and forms a complete solid solution with it.

However, in a preferred embodiment of the invention the third phase is predominantly a crystalline phase; the third phase may be a recrystallised form of the glassy phase. As described below, this can be achieved by subjecting the material to heat treatment.

Advantageously the third phase is in the form of isolated pockets distributed in the ceramic material. It is preferred that these isolated pockets are predominantly crystalline.

According to another aspect of the invention, there is provided a ceramic material of silicon aluminium oxynitride, consisting substantially entirely of a first phase of $\alpha$-phase sialon and a second phase of $\beta$-phase sialon.

According to another aspect of the invention there is provided a method of manufacturing a ceramic material, which comprises:

(a) forming a mixture of first and second components, the first component containing the elements silicon, aluminium, oxygen and nitrogen, and the second component containing an oxide of a cationic element;

(b) sintering said mixture for a time and at a temperature, or series of different temperatures, sufficient to produce an intermediate product comprising a first phase of $\alpha$-phase sialon, a second phase of $\beta$-phase sialon, and a substantially continuous intergranular third phase; and

(c) further heating said intermediate product for a time and at a temperature, or series of different temperatures, sufficient to produce a ceramic material comprising a first phase of $\alpha$-phase sialon, a second phase of $\beta$-phase sialon and a third phase, wherein substantially all the third phase is present in the ceramic material in the form of a discontinuous phase.

Step (c) can be performed immediately after step (b) without any interruption in the procedure, so that the method proceeds continuously.

It will be appreciated that the intermediate product may have some isolated pockets of the third phase. However, the intermediate product will be substantially in the form of a continuous intergranular phase. In fact, the intermediate product is similar to the ceramic material disclosed in GB-A-2118927.

It will also be appreciated that the method can be applied to existing ceramic material manufactured as described in GB-A-2118927. In this case it is necessary to take the existing ceramic material and to perform step (c) only.

The third phase of the ceramic material would normally be a predominantly glassy phase when manufactured by the above method; it may also include other constituents. When the second component includes yttrium the other constituents may include YAG, YAM, N-YAM and Y-N-$\alpha$-Wollastonite.

Preferably the ceramic material is subjected to a further heat treatment in order to convert the third phase from a predominantly glassy phase to a predominantly crystalline phase.

This may be achieved by reducing the temperature of the ceramic material to a temperature below the fictive temperature of the glassy phase, then reheating the ceramic material to a temperature above the fictive temperature to recrystallise the glassy phase. When the ceramic material is subsequently cooled, it is found that the third phase is predominantly crystalline.

Suitable temperatures and times for step (b) may be ascertained from the disclosure of GB-A-2118927. It will be clear from this reference that temperatures between about $1600°$ C and about $2000°$ C are preferred. For example, the sintering in step (b) may be carried out for about five hours at a temperature of $1600°$ C, or for about ten minutes at a temperature of $2000°$ C.

Step (c) is also desirably carried out at temperatures between about $1600°$ C and $2000°$ C. Step (c) would be carried out in less than one hour when at higher temperatures and up to about five hours when at lower temperatures. Clearly there are many different combinations of temperatures and times which are suitable. It is even possible for both steps (b) and (c) to be carried out at a constant temperature. The basic guideline is that the time decreases with increasing temperature. One example of suitable times and temperatures for step (c) is given in the example hereinafter. Other suitable times and temperatures can readily be determined by trial and error. The product of step (c) can be examined by x-ray diffraction to determine whether any third phase is crystalline, and by electron microscopy to determine whether the third phase has been converted from the continuous structure to the discontinuous structure. This can readily be ascertained by an examination of the photomicrographs produced by an electron microscope. Typically the magnification would be between about 40,000 and 120,000.

In one embodiment of the method according to the invention the first component may be silicon nitride and alumina, or aluminium nitride and silica. If desired at least part of the silicon and alumina may be present as inherent impurities on the silicon nitride and aluminium nitride respectively. It is possible to use silicon nitride, alumina, aluminium nitride and silica as the first component.

In another embodiment the first component may include silicon nitride and "polytype". Polytype is a silicon aluminium oxynitride having the crystal lattice structure of aluminium nitride, in which silicon atoms have partially replaced aluminium atoms and oxygen atoms have partially replaced nitrogen atoms, whilst maintaining the electrical balance. Polytype is further described in GB-A-1573299. Typical examples of such polytype are 15R ($SiAl_4O_2N_4$) 12H ($SiAl_5O_2N_5$), 21R ($SiAl_6O_2N_6$) and 27R ($SiAl_8O_2N_8$); 21R polytype is preferred.

The cationic element of the second component is preferably yttrium. However, other less preferred elements include scandium, cerium, calcium, lithium, magnesium, lanthanum, and other metals of the lanthanum series.

The relative proportions of the components are preferably selected to produce a ceramic material in which the $\alpha$-phase and $\beta$-phase sialon comprises over 95% by weight of the total, and the third component comprises less than 5% by weight of the total. As explained above, it is preferred that the third phase is less than 3%, most preferably less than 1% of the total.

It is believed that during step (c) of the method according to the invention a proportion of the third phase produced during step (b) forms more $\alpha$-phase sialon. This reduces the amount of the third phase, thereby causing the third phase to be distributed in a discontinuous form rather than as continuous intergranular phase. The third phase is substantially entirely recrystallised by the further heat treatment.

One of the considerations involved in the selection of the relative proportions of the starting material is that the amount of $\alpha$-phase sialon produced should be sufficient to enable as much residual liquid of the third phase as possible to be accommodated in the $\alpha$-phase and $\beta$-phase.

3

In a development of the invention, the ceramic material is further treated, preferably by heat treatment until substantially all the third phase is absorbed into either the $\alpha$- or $\beta$-phase sialon until the material consists substantially entirely of $\alpha$-phase and $\beta$-phase sialon.

Reference is now made to the accompanying drawings in which:-

Figure 1 is a schematic illustration of photomicrograph of a ceramic material produced in accordance with GB-A-2118927; and

Figure 2 is a schematic illustration of photomicrograph of a ceramic material produced in accordance with the example described below.

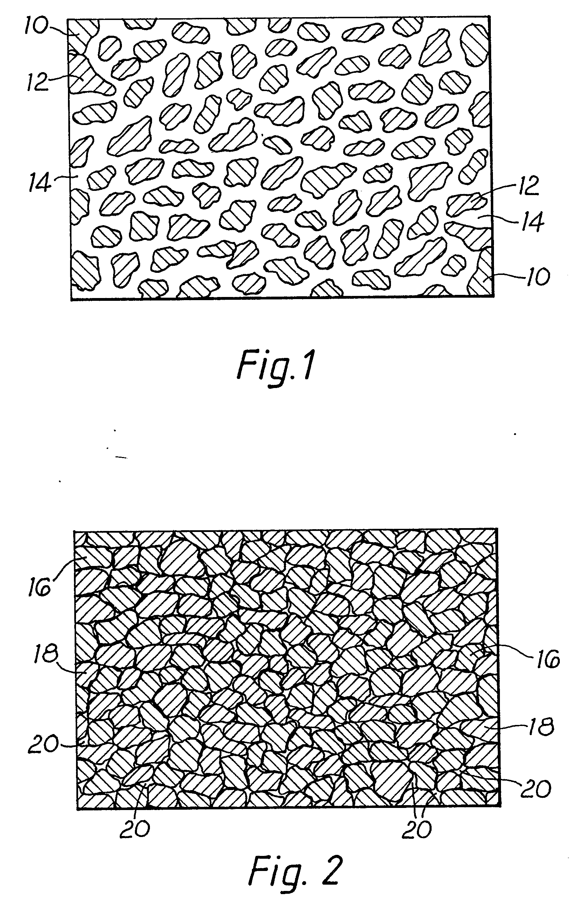

In Figure 1 the ceramic material comprises a granular phase of $\alpha$-phase sialon 10 and $\beta$-phase sialon 12 which is substantially surrounded by a continuous intergranular glassy phase 14. In Figure 1 the proportion of the glassy phase 14 has been shown greatly increased, for the purpose of clarity.

In Figure 2 there is no continuous intergranular phase. The ceramic material shown in Figure 2 comprises a first phase 16 of $\alpha$-phase sialon, a second phase 18 of $\beta$-phase sialon, and a third phase 20 which is a glassy phase or crystalline phase. It will be observed that the third phase 20 is discontinuous in the form of isolated pockets.

## EXAMPLE

A powder mixture was first prepared consisting of 78 wt.% silicon nitride material (manufactured by Anzon Inc. and designated 1002), 6 wt.% $Y_2O_3$ and 16 wt.% 21R polytype.

The powder mixture was ball milled in isopropanol for 72 hours in a sialon media and tray dried at 100°C. The resultant powder was then screened through a 45 mesh sieve and isostatically pressed into one inch (2.54cm) cubes at 2000 psi (13.8 MPa).

The cubes were sintered by heating to 1600°C for two hours followed by 1750°C for five hours. This produced a material comprising $\alpha$-phase sialon, $\beta$-phase sialon and a third glassy phase distributed throughout each cube in isolated pockets.

The cubes were then subjected to a further heat treatment. This involved cooling the cubes to 1250°C and holding them at that temperature for seven hours, then reheating to 1400°C for five hours. This caused the glassy material to recrystallise.

The ceramic material thus produced was then subjected to a number of tests. The results of these tests are as follows:-

| Rockwell hardness | : | 94.7 |
|---|---|---|
| Strength | : | 800 MPa |
| Creep at 1277°C for 150 hours | : | less then 0.01% |
| Creep at 1327°C for 50 hours | : | 0.1% |

Also, the ceramic material was found to be very resistant to oxidation.

## Claims

1. A ceramic material of silicon aluminium oxynitride, comprising a first phase of $\alpha$-phase sialon, a second phase of $\beta$-phase sialon, and a third phase, characterised in that substantially all the third phase present in the ceramic material is in the form of a discontinuous phase.

2. A ceramic material according to Claim 1, characterised in that the third phase comprises less than substantially 5% of the total weight thereof.

3. A ceramic material according to Claim 1, characterised in that the third phase comprises less than substantially 3% of the total weight thereof.

4. A ceramic material according to Claim 1, characterised in that the third phase comprises less than substantially 1% of the total weight thereof.

5. A ceramic material according to any preceding claim, characterised in that the third phase is predominantly a crystalline phase.

6. A ceramic material according to any one of claims 1 to 4, characterised in that the third phase is predominantly a glassy phase.

4

7. A ceramic material according to any preceding claim, characterised in that the third phase is distributed in the ceramic material in the form of isolated pockets.

8. A ceramic material of silicon aluminium oxynitride, consisting substantially entirely of a first phase of α-phase sialon and a second phase of β-phase sialon.

9. A method of manufacturing a ceramic material comprising:

(a) forming a mixture of first and second components, the first component containing the elements silicon, aluminium, oxygen and nitrogen, and the second component containing an oxide of a cationic element; and

(b) sintering said mixture for a time and at a temperature, or series of different temperatures, sufficient to produce an intermediate product comprising a first phase of α-phase sialon, a second phase of β-phase sialon, and a substantially continuous intergranular third phase; characterised by the step of:

(c) further heating said intermediate product for a time and at a temperature, or series of different temperatures, sufficient to produce a ceramic material comprising a first phase of α-phase sialon, a second phase of β-phase sialon and a third phase, wherein substantially all the third phase is present in the ceramic material in the form of a discontinuous phase.

10. A method according to claim 9, characterised in that the third phase is predominantly a glassy phase.

11. A method according to claim 10, characterised in that after step (c) the ceramic material is subjected to further heat treatment to convert the glassy phase to predominantly a crystalline phase.

12. A method according to claim 11, characterised in that after step (c) the temperature of the ceramic material is reduced below the fictive temperature of the glassy third phase, and subsequently the temperature of the ceramic material is increased to a temperature above said fictive temperature to recrystallise the glassy phase.

13. A method according to any of claims 9 to 12, characterised in that the ceramic material is further treated to substantially entirely remove the third phase from the material.

14. A method according to claim 12, characterised in that the further treatment comprises a heat treatment.

15. A method according to any of claims 9 to 14, characterised in that the first component is selected from the group consisting of:

(a) silicon nitride and alumina;

(b) aluminium nitride and silica;

(c) silicon nitride, silica, aluminium nitride and alumina; and

(d) silicon nitride and polytype

16. A method according to any of claims 9 to 15, characterised in that the second component is selected from the group consisting of yttrium, scandium, cerium, calcium, lithium, magnesium, lanthanum and other metals of the lanthanum series.

**Fig.1**

**Fig. 2**